# EUROPEAN PATENT APPLICATION

(11) **EP 2 093 839 A2**
(43) Date of publication of application: **26.08.2009**
(21) Application number: 09002435.7
(22) Date of filing: 20.02.2009
(51) Int. Cl.: H01R 12/16

(54) **Card connector**

(30) Priority: 20.02.2008 JP 2008039366
(71) Applicant: Mitsumi Electric Co., Ltd., Tama-shi, Tokyo 206-8567 (JP)
(72) Inventor: Nishio, Atsuhi, Tama-shi Tokyo 206-8567 (JP); Takagi, Souichi, Tama-shi Tokyo 206-8567 (JP); Suzuki, Isao, Tama-shi Tokyo 206-8567 (JP); Goto, Tadahiro, Tama-shi Tokyo 206-8567 (JP)
(74) Representative: Epping - Hermann - Fischer

(57) **Abstract**

A card connector has enough endurance for insertion and removal of a memory card and allows stable electrical connection, and achieves miniaturization and lowering of a profile of the connector. This card connector 100 is provided with contacts (130) in a ceiling part (104). The contacts (130) are each fixed along the insertion direction inside an upper surface part (142) of a housing (140), and includes: a bridling strip part (132) that includes a step part (135) which differs a part on a card insertion slot (102) side and a part located closer to the insertion direction side than to the card insertion slot (102) side in the thickness direction of the upper surface part (142); and a contact strip part (134) that is formed to branch from the bridging strip part (132) and contacts an electrode (21) of the memory card (20). The upper surface part (142) is formed along the shape of bridging strip parts (132). In the upper surface part (142), rear side cover plate (152) of a plate (150), placed thanks to the step part (135) in practically the same plane height with the outer surface of the upper surface portion (142b) on the card insertion slot (102), is layered in the upper surface portion (142c) closer to the insertion direction side than the step part (135).

## Description

### BACKGROUND OF THE INVENTION

### Field of the Invention

The present invention relates to a card connector that holds an inserted memory card in the mounting position and that is electrically connected with the electrodes of the memory card.

### Description of the Related Art

Conventionally, a card-type memory card is known as a recording medium for storing image data taken by a digital camera or mobile telephone with a camera function, a recording medium for storing music digital data played back by a mobile music player or a recording medium for storing text data that is created.

In a memory card, generally, a readable and writable semiconductor memory (RAM) is accommodated inside a small resin package formed in a rectangular thin flat shape in appearance and a plurality of electrodes electrically connected with an end part of a back surface in the package are arranged in parallel.

Memory cards are formed in dimensions and shapes determined per type, and are mounted in electronic equipment such as digital cameras, mobile music players, notebook personal computers or mobile telephones through card connectors matching the dimension and shapes per type of the memory card.

For example, as disclosed in Japanese Patent Application Laid-Open No.2002-184525, a card connector is generally formed in a flat plate shape by covering a resin housing by a shield cover, and forms card insertion space which communicates with a card insertion slot formed on the front surface side.

The housing is formed with resin to secure insulation property, and has: a flat bottom surface part that partitions the card insertion space on the bottom surface side and that is provided in the end part in the insertion direction with terminals contacting electrodes of a memory card to be inserted; housing sidewall parts that rise from both side parts of the bottom surface part along the card removing direction; and a rear wall part that closes on the end part on the insertion direction side. To counteract static electricity by covering the entire housing by the cover, a shield cover of a housing is formed with a metal plate integrally forming a flat cover upper plate part partitioning the upper surface of the card insertion space and the left and right sidewalls covering the housing sidewall parts. Further, this card connector has a push-in/push-out lock mechanism, and is provided with a slider which is part of the lock mechanism and which is able to slide in the back and forth direction, on one side of the left and right side parts in a contact terminal group. With this lock mechanism, by pressing the memory card in the insertion direction, the slider engaged with the memory card moves to hold the memory card in the card mounting position, and, by pressing again the memory card in the insertion direction and releasing the holding state of the slider, the slider moves in the detaching direction to press and eject the memory card in the detaching direction.

By the way, there is a "normal type" card connector to which the memory card turning the surface provided with contact points downward (toward the housing) is inserted, and there is a "reverse type" card connector to which the memory card turning the surface provided with contact points upward (toward the shield cover) is inserted.

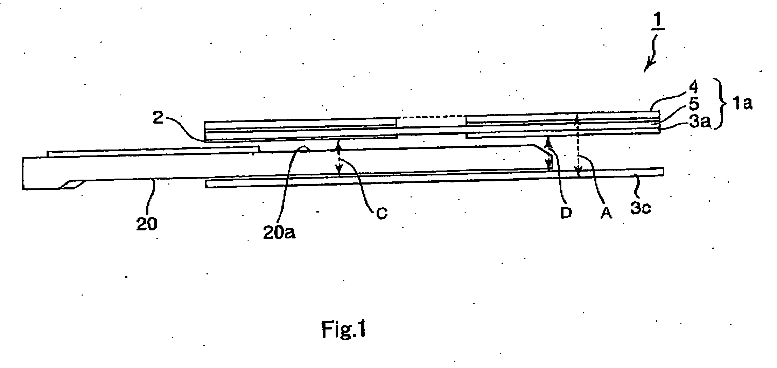

FIG.1 is a main part cross-sectional view schematically showing a conventional reverse type configuration.

As shown in FIG.1, reverse type card connector 1 has card insertion slot 2 on the front surface side, and a memory card turning surface 20a provided with contact points upward, is inserted from card insertion slot 2. Card connector 1 is formed by covering by the shield cover the housing having both sidewall parts which vertically drop from both sides of upper plate part 3a of a flat rectangular shape, and limbs 3c are provided in lower side parts of the both sidewall parts such that limbs 3c are located orthogonal to the lower side parts and face upper plate part 3a.

These limbs 3c support from both sides the surface of the opposite side to surface 20a in which contact points are formed. Housing 3 is formed with resin which is an insulation member, and, in upper plate part 3a facing surface 20a in which contact points are provided in memory card 20 to be inserted, terminals 5 which contact electrodes of memory card 20 are provided.

Here, terminals 5 are embedded along the direction in which upper plate part 3a of housing 3 extends, and upper surface part 1a of card connector 1 itself covering the surface of the contact point side of memory card 20 to be inserted, is formed with resin layer 3a, terminal layer 5. resin layer 3a and shield cover layer 4 from below.

By the way, following miniaturization and lowering of profiles of electronic components, miniaturization of the card connector itself, that is, lowering of the profile of the card connector is desired. In the structure of reverse type card connector 1 shown in FIG. 1. further lowering of the profile is desired on conditions that a card connector has enough endurance for insertion and removal of memory card 20 and allows stable electrical connection.

### SUMMARY OF THE INVENTION

It is therefore an object of the present invention to provide a card connector that has enough endurance for insertion and removal of a memory card and that allows stable electrical connection, and that achieves miniaturization and lowering of the profile of the connector.

The present invention is a card connector of a reverse type that has in a ceiling part a contact which, when a memory card inserted through a card insertion slot is accommodated in an accommodating part, is connected with a connection terminal of the accommodated memory card, and achieves the above object by including: a resin housing that has a planar upper surface part which extends along an insertion direction of the memory card and which faces one surface of the memory card in which the connection terminal is provided; and a shield cover that is attached to the housing and that comprises a cover plate part which forms the ceiling part with the upper surface part, and employing a configuration where the contact has: a fixed strip part that is fixed in the upper surface part of the housing and that includes a step part which is located extending along the insertion direction within a range of a thickness of the upper surf ace part, and which produces a difference between a part on a card insertion slot side and a part located closer to an insertion direction side than the card insertion slot side, in a thickness direction of the surface part; and a contact strip part that is formed to branch from the fixed strip part and project in the insertion direction, inside the accommodating part, and that contacts the connection terminal; and in the upper surface part where there are an upper surf ace portion that is closer to the card insertion slot side than the step part and an upper surface portion that is closer toward a depth than the step part, the ceiling part is formed by layering the cover plate part with an outer surface placed on practically a same plane height with an outer surface of the other upper surface portion, in one upper surface portion located closer to an accommodating part side than the other upper surface portion by means of the step part.

### BRIEF DESCRIPTION OF THE DRAWINGS

FIG.1 is a cross-sectional view schematically showing a configuration of a conventional card connector;
FIG.2 shows a configuration of a card connector according to an embodiment of the present invention;
FIG.3 shows a configuration of the card connector according to an embodiment of the present invention;
FIG.4 is a plan view of a memory card mounted in the card connector;
FIG.5 is a plan view of a housing from which a plate is removed in the card connector according to an embodiment of the present invention;
FIG.6 is a main part cross-sectional view showing contacts of the card connector according to the present embodiment: and
FIG.7 is a side cross-sectional view schematically showing a configuration of the upper surface portion of the card connector according to an embodiment of the present invention.

### DETAILED DESCRIPTION OF THE PREFERRED EMBODIMENT

An embodiment of the present invention will be described in detail below with reference to the accompanying drawings.

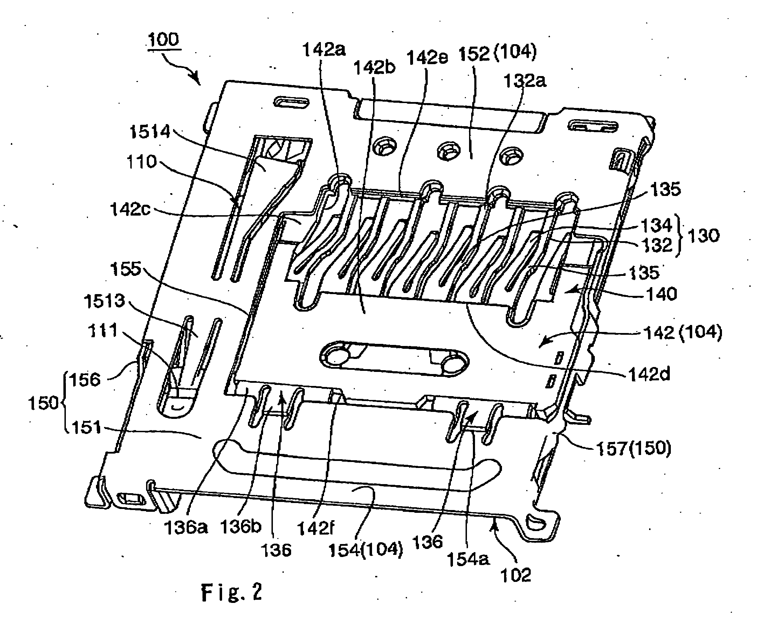

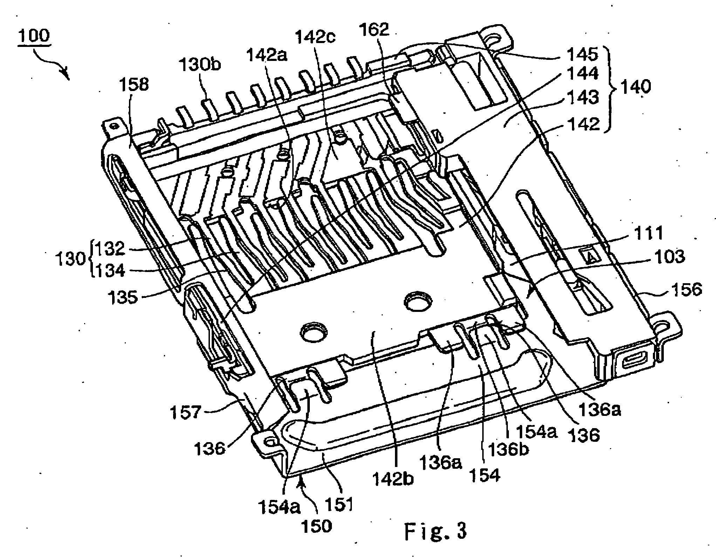

FIG.2 and FIG.3 show a configuration of a card connector according to an embodiment of the present invention, and FIG.2 is a perspective view of the card connector seen from above and FIG.3 is a perspective view of the card connector seen from below.

Memory card connector 100 shown in FIG.2 and FIG.3 is card connector 100 having push-in and push-out (also referred to as "push(lock)/push(eject)") type ejecting mechanism 110, and is used by loading the memory card which has a built-in IC chip.

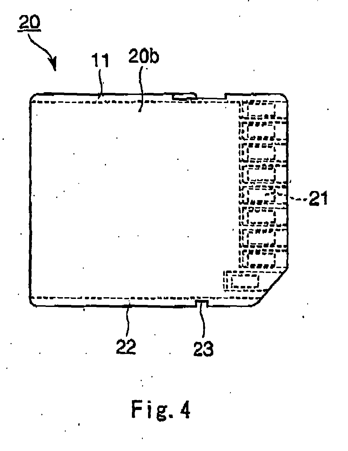

FIG. 4 is a plan view of the memory card mounted in the card connector.

Memory card 20 shown in FIG.4 is formed in practically a flat rectangular shape and electrodes 21 are arranged at the tip portion on one surface of memory card 20 (here, the "upper back surface" for convenience) in a line in a direction orthogonal to the insertion direction. Further, in both side surfaces extending along the longitudinal direction of memory card 20, thin wall parts are formed by projecting the top surfaces of the both side surfaces, and, in one side surface part 22 of the thin wall parts, concave notch part 23 that removably engages with slider 111 of ejecting mechanism 110 is formed. Generally, data can be deleted or written freely from this memory card 20, and electrodes 21 are built in and are connected with a flash memory in which content is not deleted even if power is turned off.

Card connector 100 shown in FIG.2 and FIG.3 is formed in practically a flat rectangular plate from a plan view and has; accommodating part (i.e. card mounting area) 103 that accommodates memory card 20 (see FIG.4) inserted from card insertion slot 102 formed on one side surface (i.e. front surface): and ejecting mechanism 110 that is located sideways from accommodating part 103 and that locks and ejects memory card 20 (see FIG.4) inserted inside accommodating part 103 from card insertion slot 102.

Further, memory card 20 is formed in dimensions and shapes determined per type, so that memory card connector 100 of the present embodiment matches the dimension and shape of the memory card to be used. Further, this memory card includes a PC card, compact flash card (registered trademark), smart media (registered trademark), SD card (secure digital memory card) (registered trademark) and memory stick (registered trademark). Further, although data can be read from and written freely into the memory card, copying data freely may be impossible in this memory card.

To be more specific, card connector 100 is formed by covering from above housing 140 having contacts 130, which contact electrodes 21 of a memory card, by shield plate 150 (hereinafter a "plate") which is a shield cover.

As shown in FIG.3, housing 140 has: upper surface part 142 that is located facing surface 20a (i.e. the back surface on the opposite side to surface 20b shown in FIG.4) having contacts (i.e. electrodes) 21 of memory card 20 to be inserted and that covers the surface having contact points 21; mechanism bottom surface part 143 that is located along one side of upper surface part 142 and that forms the bottom surface portion of ejecting mechanism 110; sidewall part 144 that vertically drops from the other aide part of upper surface part 142 and that partitions accommodating part 103 in the other side surface; and rear wall part 145 that vertically drops from a rear end part of upper surface part 142 and that partitions accommodating part 103 in the rear end. That is, housing 140 accommodates memory card 20 by planar upper surface part 142 that extends along the insertion direction and that faces one surface 20a of memory card 20, and by both sidewall parts (i.e. sidewall part 144 and the inner wall portion of ejecting mechanism 110) located so as to surround both side surfaces of memory card 20 that vertically drop a predetermined space apart from upper surface part 142.

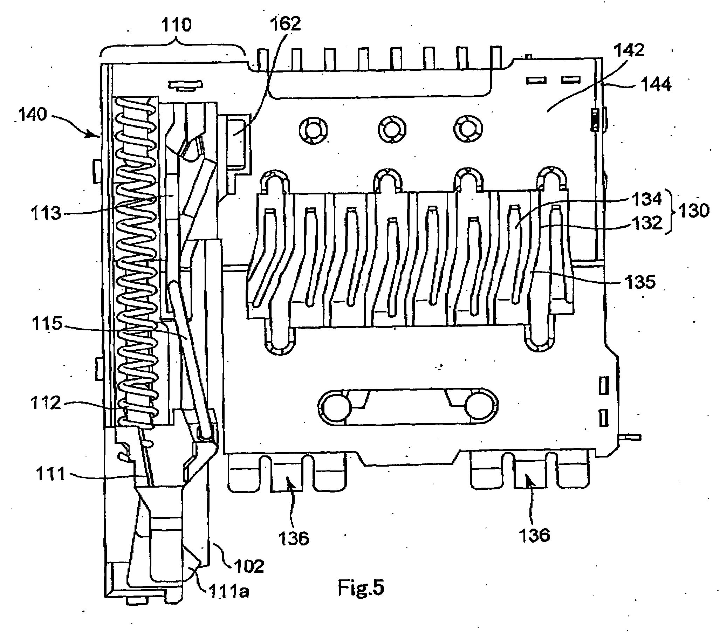

FIG.5 shows the state where plate 150 is removed in the card connector shown in FIG.2.

Housing 140 is formed with insulating material such as resin, upper surface part 142, sidewall part 144 and the inner surface of ejecting mechanism 110 that faces the inner wall surface of sidewall part 144 in the width direction form practically a U shape from a front view, and these upper surface part 142, sidewall part 144 and ejecting mechanism 110 define the upper surface and both side surfaces of accommodating part 103.

As shown in FIG.5, ejecting mechanism 110 located sideways to accommodating part 103 of housing 140 is formed by covering from above slider 111, heart cam groove 113 and lock pin 115 located on mechanism bottom surface part 143 of housing 140, by plate 150.

Slider 111 is able to move in the insertion direction, is located swingably in a direction away from accommodating part 103 near card insertion slot 102, and is urged toward card insertion slot 102 by compressed coil spring 112 which is an urging members.

Slider 111 has claw part 111a projecting inside accommodating part 103 below upper surfaces part 142, and this claw part 111a engages with notch part 23 of memory card 20 to be inserted from card insertion slot 102.

Further, when slider 111 itself swings in the direction away from accommodating part 103 near card insertion slot 102, claw part 111a retreats from inside accommodating part 103.

Further, on the insertion direction side beyond the moving area of slider 111 (corresponding to the depth and at the rear end of the connector), heart cam groove 113 is formed in mechanism bottom surface part 143. One end part of lock pin 115 is attached rotatably to slider 111. Lock pin 115 is located extending backward from slider 111 and the other end part is slideably located inside heart cam groove 113.

Slider 111 is pressed toward mechanism bottom surface part 143 of housing 140 by slider pressing strip 1513 of plate 150 and is able to move in the insertion direction. Further, lock pin 114 is pressed toward heart cam groove 113 such that the other end part slides without detaching from heart cam groove 113 thanks to lock pin pressing strip 1514. Further, compressed coil spring 112 is bridged between slider 111 and rear wall part 145 (see FIG.3).

Ejecting mechanism 110 configured in this way functions like the conventional one. That is, when claw part 111a engages with the memory card to be inserted and is pressed in the insertion direction, slider 111 moves toward the depth, against compressed coil spring 112, and lock pin 115 passes the straight part of heart cam groove 113 and engages with the lock part. When slider 111 is pressed again toward the insertion direction, slider 111 is released from the lock part and moves to the movement start position passing the groove part of the opposite side to the straight part. By this means, slider 111 cancels the locked state, moves toward card insertion slot 102 by means of compressed coil spring 112 and moves the memory card to the ejection position.

Further, with housing 140 including mechanism bottom surface part 143 of ejecting mechanism 110 on one side, opening part 142a is formed in the center portion of flat upper surface part 142. This opening part 142a is surrounded by upper surface portion 142b on the front end side and upper surface portion 142c on the rear end side of different height levels in the insertion direction.

In upper surface portion 142b on the front end side and upper surface portion 142c on the rear end side, projecting strips, which project in opposing directions (i.e. removing direction) are successively provided, and these successive projecting strips define both side parts of opening part 142a. In the jointing part of these projecting strips, a step is formed in the direction orthogonal to the insertion direction, so that, across this step, the height levels of upper surface portion 142b on the front end side and upper surface portion 142c on the rear and side differ. By this means, upper surface portion 142b on the front end side and upper surface portion 142c on the rear end side are placed in a state to be located in plane areas at the different height. Here, the height level of upper surface portion 142c on the rear end side is lower than upper surface portion 142b on the front end side.

Upper surface portion 142c on the rear end side refers to a portion on the insertion direction side beyond a portion in which a contact point of contact 130 is located in upper surface portion 140, and is closer to accommodating part 103 in the thickness direction of card connector 100 than upper surface portion 142b on the front end side. Upper surface portion 142c on the rear end side is thinner than the thickness of upper surface potion 142b on the front end side and upper surface part 142 forms a hollow shape from a side view in upper surface portion 142c on the rear end side. Further, rear side cover plates 152 of plate 150 in a layered state cover this hollow portion.

Inside opening part 142a of upper surface part 142, contacts 130 are bridged from front end opening side part 142d to rear end opening side part 142e partitioning opening part 142a.

Contact 130. is formed with an electrically conductive member, which is elastically deformable, and is arranged so as to branch and extend from the front end side toward the rear end side, and includes: bridging strip part (i.e. fixed strip part) 132 arranged to bridge from the front end side to the rear end side inside the opening part; and contact strip part 134 contacting electrode 21 of memory card 20 at the tip of contact strip part 134.

Here, contact 130 is formed by machining an electrically conductive plate material (here, sheet metal) embedded in upper surface part 142. The sheet metal is formed in the housing by insert molding, so that upper surface part 142 employs a configuration where extremely thin resin layers are formed on the top and back surfaces of the sheet metal.

The part of contact 130 arranged in upper surface portion 142b on the front and side in upper surface part 142 is located so as to be insulated from parts of other contacts 130 adjacent in the horizontal direction on the front end part side.

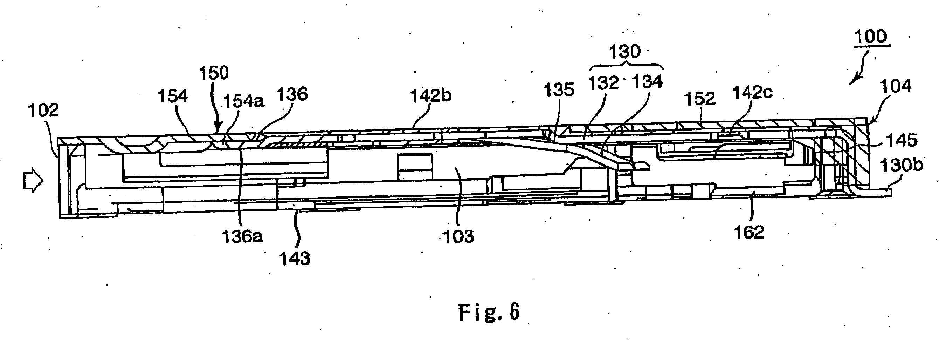

FIG.6 is a main part cross-sectional view showing contacts of the card connector according to the present embodiment.

As shown in FIG.2, FIG.3 and FIG.6, bridging strip part 132 of contact 130 includes step part 135 (i.e. Z-bent part bent in a Z-shape) in an intermediate portion inside opening part 142a, and the horizontal planes located on the front end side and the rear end side across this step par 135 differ vertically (i.e. in the thickness direction).

Step part 135 is formed in association with the step in the boundary between upper surface portion 142b on the front end side and upper surface portion 142c on the rear end side in upper surface part 140, and is formed in a position to align with the step in upper surface part 142 of bridging strip part 132 in the width direction.

By this means, thanks to step part 135, contact 130 is provided in association with the top and back surfaces of upper surface portion 142b on the front end side and upper surface portion 142c on the rear end side of different height levels located in upper surface part 142.

In contact 130, end part 132a (i.e. end part on the rear end side of the connector) of bridging strip part 132 is bent to pass inside rear wall part 145 and is connected with lead part 130b projecting backward from the outer surface of rear wall part 145. Each lead part 130b is connected with a corresponding wiring pattern on the substrate when card connector 100 is mounted on the substrate.

In this way, contact 130 passes through lead part 130b, rear wall part 145 and upper surface portion 142c on the rear end side of upper surface part 142 and is bridged across opening part 142a. Contact 130 inside this opening part 142a is connected with electrode 21 of memory card 20 through a tip portion of contact strip part 134 which returns from the front end side of opening part 142a and extends toward the rear end side inclining in the direction away from bridging strip part 132.

Bridging strip part 132 of contact 130 is embedded inside upper surface part 142 of housing 140 along the insertion direction. Bridging strip part 132 includes step part 135 producing a difference between a part on the card insertion slot side and a part located closer to the insertion direction than to the card insertion slot side. Further, contact strip part 134 is formed branching from bridging strip part 132 and projecting in the insertion direction and toward accommodating part 103, and contacts electrode (i.e. connection terminal) 21.

Upper surface part 142 is formed along the shape of bridging strip part 132 of this contact 130, and is fixed to front side cover plate 154 in cover upper plate part 121 of plate 150 by locking parts 136 formed in outer rim 142f (see FIG.2) on the front surface side.

Locking parts 136 are provided projecting from outer rim 142f on the front surface side (see FIG.2) to the front (i.e. the card ejection direction) and is formed by machining, in the sheet metal forming contacts 130, a part of the portion located on the cared insertion slot 102 side. Consequently, looking parts 136 are formed integrally by insert molding in upper surface part 142 of the housing.

Here, locking part 136 includes two flat projecting tips 136a of a flat shape and claw tip part 136b extending from the outer rim of the front side of upper surface part 142 in the ejection direction (corresponding to the front side) along upper surface part 142. Flat projecting tips 136a are aligned and located distant in the width direction, and abut on the back surface of front side cover plate 154. Claw part 136b extends toward the ejection direction from between flat projecting tips 136a, and, thanks to the step bent toward the surface, abuts on the surface of locked tip 154a which is formed extending in the insertion direction from the rim part on the insertion direction side partitioning opening part 155 in front side cover plate 154.

By engaging claw tip part 136b with locked tip 154a and engaging flat projecting tips 136a with a predetermined portion of front side cover plate 154, locking part 136 sandwiches front side cover plate part 154 of plate 150 in the thickness direction. Thanks to this locking part 136, upper surface part 142 is fixed on practically the same plane with cover upper plate part 151 inside opening part 155 formed in cover upper plate part 151 of plate 150.

As shown in FIG.2 and FIG.3, plate 150 is electrically conductive, is formed by applying machining such as banding to a sheet metal here and is formed in practically a rectangular shape from a plan view, and includes cover upper plate part 151 covering the outer surface of upper surface part 142 of housing 140 and side plate parts 156 and 157 formed by bending both side parts of cover upper plate part 151 to be orthogonal.

Cover upper plate part 151 is located on accommodating part 103 and covers mechanism bottom surface part 143 from above. Further, side plate parts 156 and 157 are formed to drop from both side parts of cover upper plate part 151 and cover the outer surface of sidewall part 144 of housing 120 and the outer surface of ejecting mechanism 110.

As shown in FIG.3, in the lower side part of side plate part 157 of plate 150, limb 158 that follows the bottom surface of sidewall part 144 and that is bent toward the interior of the connector, is formed. This limb 158 extends below accommodating part 103, projects from inside sidewall part 144 of housing 140 and faces upper surface part 142 of the housing.

Further, this limb 158 and limb 162 which faces limb 158 in the width direction and which projects from the lower surface of mechanism bottom surface part 143, support surface 20b of memory card 20 to be inserted upside down with respect to card connector 100 from directions of both sides.

In the center portion in cover upper plate part 151 of plate 150 which overlaps accommodating part 103, that is, between rear side cover plate 152 and front side cover plate 154 located distant in the width direction, opening part 155 is formed. Inside this opening part 155, upper surface portion 142b on the front end side of upper surface part 142 of housing 140 and opening part 142a are arranged.

In this way, plate 150 puts rear side cover plate 152 over upper surface portion 142c on the rear end side in upper surface part 142 of the housing, and attaches inside opening part 155 upper surface part 142 of housing 140 where locking part 136 locks with front side cover plate 154, in a state where upper surface portion 142b on the front end side and contacts 130 inside opening part 142a of upper surface part 142 are located.

The part covering ejecting mechanism 110 in upper plate part 151 of this plate 150 is provided with: slider pressing strip 1513 that presses slider 111, located movably in the insertion direction inside ejecting mechanism 110, toward the bottom surface to restrict a movement in the vertical direction; and lock pin pressing strip 1514 that prevents lock pin 115 moving following slider 111 from slipping from heart cam groove 113.

These slide pressing strip 1513 and lock pin pressing strip 1514 are formed integrally with plate 150 by an elastically deformable member. Here, slider pressing strip 1513 and lock pin pressing strip 1514 are formed by projecting downward a part of cover upper plate part 151 of plate 150, which is formed by machining a sheet metal, and machining this part as a leaf spring. These slider dressing strip 1513 and look pin pressing strip 1514 restrict a movement of slider 111 and the lock pin of ejecting mechanism 110, in a direction orthogonal to the insertion direction (here, the vertical direction).

Slider pressing strip 1513 and lock pin pressing strip 1514 are integrally formed in plate 150 in this way, so that the thickness of plate 150 includes a predetermined thickness having the functions of slider pressing strip 1513 and look pin pressing strip 1514.

Further , plate 150 prevents electro magnetic noise, which is produced by the operating frequencies of signals running between the connector and memory card and which causes electro magnetic interference (EMI) with respect to other components or other equipment near electronic equipment.

In this way, card connector 100 of the present embodiment refers to a reverse type connector provided with contacts 130, which contact electrodes 21 of memory card 20, on the surface (i.e. upper surface when actually mounted on the substrate) opposite to the surface mounted on the substrate, in addition to the front surface side forming card insertion slot 102. That is, in card connector 100, ceiling part 104 is located facing the surface having electrodes 21 of memory card 20 to be inserted to inner accommodating part 103 from card insertion slot 102.

Ceiling part 104 of connector 100 is formed with: front side cover plate (cover plate part on the card insertion slot side) 154; upper surface part 142 of housing 140 in which contacts 130 are inserted; and rear side cover plate (cover plate part) 152 layered on upper surface portion 142c on the rear end side in upper surface part 142, from the front surface side (i.e. card insertion slot 102 side) toward the rear surface side.

That is, in upper surface part 142 where there are upper surface portion 142b that is closer to the card insertion slot side than step part 135 and upper surface portion 142c that is closer to the insertion direction side than step part 135, ceiling part 104 is formed by layering rear side cover plate 152 of shield plate 150 having the outer surface placed in practically the same plane height with the outer surface of one upper surface portion 142b, in other upper surface portion 142c located closer to the insertion direction side than step part 135.

In this way, Ceiling part 104 includes front side cover plate (i.e. cover plate part on the card insertion slot side) 154 of plate 150 that is located in a position beyond rear side cover plate 152 on the detaching direction side to sandwich opening part 155 with rear side cover plate 154 of plate 150, and that partitions the upper side part of card insertion slot 102 and bridges over both sidewall parts of housing 140.

By this means, upper surface portion (upper surface portion on the front end side) 142b on the card insertion slot 102 side in upper surface part 142 of housing 140 retreats beyond upper surface portion (upper surface portion on the rear end side) 142c closer to the insertion direction side than step part 135, in the height direction with respect to accommodating part 103. Further, in upper surface part 142, upper surface portion 142b on the front end side is located adjacent to front side cover plate 154 on the insertion direction side. This front side cover plate 154 is located on practically the same plane with upper surface portion 142b on the front side in upper surface part 142 and fixes upper surface portion 142b.

In upper surface part 142, upper surface portion 142b on the front end side is located in practically the same plane with front side cover plate 154, and the surface (i.e. outer surface) of upper surface portion 142b on the front end side is located on practically the same plane with the surface (i.e. outer surface) of front side cover plate 154.

This upper surface portion 142b on the front end side is fixed by fitting locking part 136, which is formed by insert molding together with contacts 130 as an insertion sheet metal, to front side cover plate 154 of plate 150 in the insertion direction (here, horizontal direction). Further, metal members (for example, contacts 130, contacts among contacts 130 located along upper surface part 142 and reinforcing upper surface part 142 and locking part 136) embedded in upper surface part 142 of housing 140 are formed by an insertion sheet metal as a piece of sheet of an insertion component machined in a predetermined shape. By this means, the process of embedding metal members apart from upper surface part 142 in resin upper surface part 142 is eliminated in the subsequent processes, so that it is possible to further improved the strength of upper surface part 142 itself and make the thickness of upper surface part 142 thinner.

That is, upper surface portion 142b on the front end side in upper surface part 142 is located by being reinforced by the insertion sheet metal and being supported by front side cover plate 154. With this configuration, the thickness of the resin portion molded integrally with the insertion sheet metal in upper surface portion 142b on the front end side is made thicker than the thickness of the same part in a conventional connector, and the shield cover layered on the same part in a conventional connector is eliminated.

That is, with card connector 100, without layering plate 150 on the upper surface of upper surface portion 142b, upper surface portion 142b on the front end side make its thickness thinner compared to a conventional one and secures strength against the load applied upon connection with contacts 130 when the memory card is inserted.

Further, the height level of upper surface portion 142c on the rear end side of upper surface part 142 is lower than upper surface portion 142b on the from end side, is reinforced by rear side cover plate 152 to be layered and is supported by front side cover plate 154 through a sheet metal, such as contacts 130 and locking parts 136, formed by insert molding.

The upper surface portions of card connector 100 configured in this way will be described in comparison with the upper surface portions of the conventional card connector.

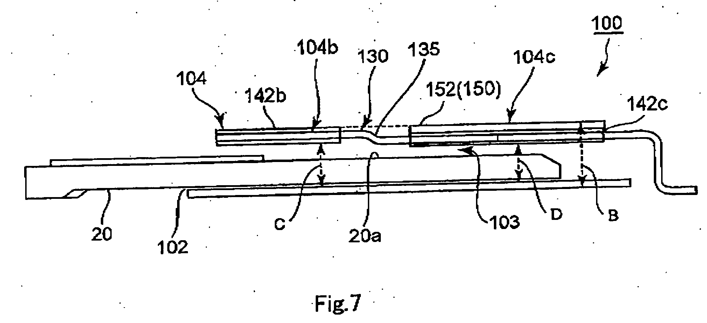

FIG.7 is a cross-sectional view schematically shoving a main configuration of the memory card according to the present embodiment.

In the structure of the upper surface portions in a conventional reverse type connector, all parts from the front surface side to the rear surface side are formed by a resin layer, contact layer, resin layer and plate (i.e. shield cover) layer from the accommodating part side (see FIG.1). That is, with the conventional card connector, upper surface parts of contacts and a plate are formed in a planar shape. In other words, the upper surface parts are formed in a linear shape of a predetermined thickness from a cross-sectional view, and the sum of the thickness dimensions of the members when assembled, produce thickness A of the connector itself.
With the conventional configuration, in the upper surface portions partitioning the upper surface of the accommodating part, a plate is attached so as to cover the entire surface of the upper surface part of the housing from above. With this configuration, strength (i.e. contact hardness) is secured in the upper surface part partitioning the accommodating part on the upper surface side such that contacts embedded in the upper surface part endure the stress resulting from the contact with pats of an inserted memory card.

By contrast with this, the configuration of upper surface portions in card connector 100 according to the present embodiment shown in FIG.7, that is, the configuration of ceiling part 104 of accommodating part 103, employs a different cross-sectional shape in a distant position in the insertion direction.

To be more specific, in upper surface part 142 forming ceiling part 104 of card connector 100, step part 135 is formed halfway in contact 130 arranged by insert molding extending in the insertion direction inside opening part 142a, and the front end side (i.e. the card insertion slot side) and rear end side differ in the vertical direction across opening part 142a.

That is, in upper surface part 142 of resin housing 140, thanks to contacts 130 formed by insert molding and having steps 135, the height (i.e. height level) varies between upper surface portion 142b on the front end side and upper surface portion 142c on the rear end side.

Plate 150 is attached to upper surface part 142 in which the height (i.e. height level) varies between upper surface portion 142b on the front end side and upper surface portion 142c on the rear end side in this way.

Plate 150 is attached to housing 140 by locating upper surface portion 142b on the front end side inside opening part 155 (see FIG.2) of cover upper plate part 151, locking front side cover part 154 with locking part 136 to fix the front side part and overlaying rear side cover plate 152 on upper surface portion 142c on the rear end side.

By this means, as shown in FIG.7, part 104b on the front end side (part in which upper surface portion 142b on the front end side is located in upper surface part 142) that does not require all of contacts 130, resin layers and a plate (i.e. shield cover) layer, is formed only with a resin layer in which contacts 130 are inserted. This is because the strength of a part on the front end side (i.e. on the card insertion slot 102 side) in the ceiling part of the card connector formed by covering by plate 150 the resin layer having the contacts, can be secured only by upper surface part 142 of the housing formed by insert molding of a sheet metal which becomes contacts 130. That is, connector 100 is different from the conventional one in that the part on the front end side (i.e. on the card insertion slot 102 side) of ceiling part 104 is formed without layering housing 140, in which contacts 130 are formed by insert molding and plate 150, in the thickness direction.

Upper surface portion 142b on the front end side of upper surface part 142 formed with the resin layer in which the insertion sheet metal forming contacts 130 is inserted in this way, is adjacent in practically the same plane to front side clover plate 154 of the sheet metal forming the rim part of card insertion slot 102, and is locked by locking part 136 to be stably fixed to plate 150 (see FIG.6).

Further, as shown in FIG.7, part 104c on the front side (i.e. insertion direction side) beyond contact points with the memory card is formed with layers of a resin layer (i.e. upper surface portion 142c on the front side) in which the sheet metal of contacts 130 is inserted and a plate layer (rear side cover plate 152) on the resin layer.

To be more specific, in part 104c in the rear end of the connector, the height level of upper surface portion 142c on the rear end side covered by rear side cover plate 152 of plate 150 is lower than the resin layer of upper surface portion 142b on the front end side thanks to step part 135. Consequently, upper surface portion 142c on the rear end side is located closer to accommodating part 103 than upper surface portion 142b on the front end side'. Rear side cover plate 152 is layered on this upper surface portion 142c on the rear end side such that the surface of rear side cover plate 152 is located on practically the same plane with upper surface portion 142b on the front end side of upper surface part 142.

By this means, card connector 100 of the present embodiment makes it possible to make thickness B of the connector thinner than thickness A of conventional connector 1 while securing height C on the front end side and height D on the rear end side of accommodating part 103 accommodating memory card 20 as in conventional connector 1 (see FIG.7).

Consequently, while effectively utilizing the part facing the back surface of the part (i.e. upper surface portion 142c on the rear end side of upper surface part 142) on the insertion direction side in ceiling part 104 which forms the dead space in a conventional configuration and securing the required clearance, card connector 100 of the present embodiment makes it possible to make the connector itself in a lower profile. Further, with card connector 100, contacts 130 do not project from the rear wall part 145 side and are formed by insert molding in upper surface part 142 of housing 140 which becomes ceiling part 104. Consequently, a structure to fix contacts 130 to rear wall part 145 is not required, so that it is possible to reduce the thickness, in the longitudinal direction accordingly.

An embodiment of the present invention has been described so far. Further, the above present invention can be variously modified without departing from the spirit of the present Invention, and it naturally follows that the present invention includes such modifications.

The card connector according to the present invention has enough endurance for insertion and removal of the memory card and allows stable electrical connection, and provides an advantage of achieving miniaturization and lowering of a profile of the connector. To be more specific, the card connector according to the present invention is useful as a reverse type memory card connector that is inserted turning the surface having contact points of the memory card toward the ceiling.

## Claims

1. A card connector of a reverse type that has in a celling part (104) a contact (130) which, when a memory card inserted through a card insertion slot is accommodated in an accommodating part, is connected with a connection terminal of the accommodated memory card, the card connector comprising:
a resin housing (140) that comprises a planar upper surface part (142) which extends along an insertion direction of the memory card and which faces one surface of the memory card in which the connection terminal is provided; and
a shield cover (150) that is attached to the housing and that comprises a cover plate part which forms the ceiling part (104) with the upper surface part wherein:
the contract comprises:
a fixed strip part (132) that is fixed in the upper surface part of the housing and that includes a step part (135) which extends along the insertion direction within a range of a thickness of the upper surface part, and which produces a difference between a part on a card insertion slot side and a part located closer to an insertion direction side than the card insertion slot side, in a thickness direction of the upper surface part;
and
a contact strip part (134) that is formed to branch from the fixed strip part and project in the insertion direction, inside the accommodating part (103), and that contacts the connection terminal: and
in the upper surface part where there are an upper surface portion (142b) that is closer to the card insertion slot side than the step part and an upper surface portion (142c) that is closer toward a depth than the step part, the ceiling part is formed by layering the cover plate part (152) with an outer surface placed on practically a same plane height with an outer surface of the other upper surface portion, in one upper surface portion located closer to an accommodating part side than the other upper surfaces portion by means of the step part.

2. The card connector according to claim 1, wherein the fixed strip part of the contact is provided in the upper surface part by insertion molding.

3. The card connector according to claim 1 or 2,
wherein:
the Shield cover further comprises a card insertion slot side cover plate part (154) that partitions an upper side part of the card insertion slot in the ceiling part and that is located on practically a same plane height with the upper surface portion on the card insertion slot side in the upper surface part of the housing; and
the upper surface portion on the card insertion slot side in the upper surface part of the housing comprises the other upper surface portion, and is located adjacent to the card insertion slot cover plate part on the insertion direction side and is fixed to the card insertion slot side cover plate part.
